# EUROPÄISCHE PATENTSCHRIFT

(11) **EP 2 107 075 B1**
(45) Veröffentlichungstag und Bekanntmachung des Hinweises auf die Patenterteilung: **21.12.2011**
(21) Anmeldenummer: 08006898.4
(22) Anmeldetag: 05.04.2008
(51) Int. Cl.: C08G 59/14, C08G 59/22, C08G 59/32, C08G 65/331, C08J 3/03

(54) **Emulgatoren für Epoxidharze**
Emulgators for epoxy resins
Emulsifiants pour résines époxydes

(43) Veröffentlichungstag der Anmeldung: 07.10.2009
(73) Patentinhaber: Cognis IP Management GmbH, 40589 Düsseldorf (DE)
(72) Erfinder: Birnbrich, Paul, 42719 Sollingen (DE); Thomas, Hans, Josef, 41352 Korschenbroich (DE); Sabbadini, Giorgio, 20017 Rho (IT); Nagorny Ulrich, 40721 Hilden (DE); Bourscheidt Georg, 40593 Düsseldorf (DE)

(56) Entgegenhaltungen:
- EP-A- 0 709 418
- GB-A- 679 536
- US-A- 5 673 506

## Beschreibung

### Gebiet der Erfindung

Die Erfindung betrifft Emulgatoren für in Wasser nicht selbstemulgierende Epoxidharze, ferner Emulgatormischungen und schließlich wäßrige Epoxidharz-Zubereitungen mit einem Gehalt an den erfindungsgemäß einzusetzenden Emulgatoren.

### Stand der Technik

Epoxidharzemulsionen sind seit langem bekannt und in der Literatur vielfältig beschrieben. Im folgenden wird unter dem Begriff der Epoxidharzemulsionen verstanden, dass es sich um wäßrige Systeme handelt, die emulgierte oder dispergierte Epoxidharze enthalten.

Epoxidharzemulsionen werden überwiegend als Beschichtungsmittel in Kombination mit entsprechenden Härtern eingesetzt. Grundsätzliche Unterschiede sind einerseits die Art der Stabilisierung sowie andererseits die mittlere Molmasse der verwendeten Epoxidharze.

So gibt es zahlreiche Patentanmeldungen zur Herstellung von Festharzdispersionen, bei denen das mittlere Molekulargewicht des Epoxidharzes im Bereich zwischen 900 und 1200 liegt und die ein Epoxidäquivalentgewicht (EEW, Epoxy Equivalent Weight) im Bereich von ca. 450-600 aufweisen. Die dabei verwendeten Emulgatoren besitzen meistens Epoxidgruppen und werden somit Teil der ausgehärteten Beschichtung; man spricht in diesem Zusammenhang auch von Reaktivemulgatoren. Reaktivemulgatoren werden bei der Festharzsynthese in das entstehende Polymer eingebunden.

Epoxidharzemulsionen enthalten in der Regel gewisse Mengen (typischerweise 3-13%) an Lösemitteln zur Verbesserung der Verfilmung in der späteren Applikation oder zur Veringerung der In-Prozess-Viskosität bei der Dispersionsherstellung sowie Reaktivverdünner und weitere Additive zur Verbesserung der Lagerstabilität.

Bei der Herstellung von Flüssigharzemulsionen werden in der Regel externe Emulgatoren zur Stabilisierung verwendet. Dabei handelt es sich zumeist um spezielle Tenside, die bei der späteren Applikation nicht Bestandteil der Beschichtung werden und somit aus dem ausgehärteten Film herausdiffundieren können.

Zum Beispiel offenbart US 5 763 506 härtbare Epoxidharz- Zusammensetzungen, die als Wasser-Dispersionen eingesetzt werden.

Im Beispiel 1 B von wird die Herstellung einer Epoxidfunktion-haltigen Verbindung offenbart, die folgenden Schritte enthält:
- Schritt 1: Reaktion zwischen 1 mol Pentaerythrit, 5 mol Propylenoxid und Epichlorhydrin.
- Schritt 2: Umsetzung des Reaktionsprodukts aus dem Schritt 1 mit einem Monoamin (Jeffamine M-2070).

EP-A-0 709 418 offenbart härtbare Epoxidharz- Zusammensetzungen, die als Wasser-Dispersionen eingesetzt werden. Methoxypolyethylenglykol wird mit Epichlorhydrin zur Reaktion gebracht (siehe Beispiele 2.3).

### Beschreibung der Erfindung

Aufgabe der vorliegenden Erfindung war es, Emulgatoren für Epoxidharze bereitzustellen. Dabei sollten die als Emulgatoren bezeichneten Substanzen in der Lage sein, Epoxidharze in Wasser zu emulgieren bzw. zu dispergieren. Bei den Emulgatoren sollte es sich außerdem um Reaktivemulgatoren handeln; darunter ist zu verstehen, dass diese Emulgatoren nicht nur in der Lage sein sollten, Epoxidharze in wäßrigen Systemen zu emulgieren bzw. zu dispergieren, sondern bei der Aushärtung des Systems - nach Zugabe eines entsprechenden Epoxidharzhärters - auch selbst Bestandteil des im Zuge der Härtung entstehenden Polymers zu werden, d.h. als Baustein in dieses Polymer integriert sind.

Vorzugsweise sollten die erfindungsgemäß zu entwickelnden Emulgatoren in der Lage sein, Epoxidharze in Wasser zu emulgieren bzw. zu dispergieren, ohne dass es eines unterstützenden Zusatzes von organischen Lösungsmitteln bedarf.

Die unter Einsatz der erfindungsgemäß einzusetzenden Emulgatoren herstellbaren wäßrigen Epoxidharzemulsionen bzw. -dispersionen sollten sich ferner durch Lagerstabilität und eine gute Gefrier-Tau-Stabilität auszeichnen.

Als ausreichend lagerstabil wird eine Emulsion bezeichnet, wenn nach mindestens 6 Monaten Lagerung bei Raumtemperatur (20 °C) keine signifikante Änderung der Partikelgröße und -Verteilung erkennbar ist (Partikelgröße < 1µm bei monomodaler Verteilung) sowie keine erkennbare Bodensatzbildung auftritt. Die Beurteilung der Lagerstabilität kann durch Lagerung bei erhöhter Temperatur (50-55°C) beschleunigt werden, hier gelten nach 4 Wochen Lagerung bei erhöhter Temperatur die oben genannten Kriterien.

Zur Charakterisierung der Gefrier-Tau-Stabilität einer Emulsion werden ebenfalls die oben genannten Kriterien zugrunde gelegt, hier wird erwartet, dass mindesten 3 Zyklen (Einfrieren der Emulsion für acht Stunden, wieder auftauen durch langsame Erwärmung auf Raumtemperatur) unbeschadet überstanden werden.

Überraschenderweise wurde gefunden, dass die unten näher bezeichneten Verbindungen E1 und insbesondere deren Kombination mit den ebenfalls unten näher bezeichneten Verbindungen E2 die genannten Aufgaben ausgezeichnet zu erfüllen vermögen.

Gegenstand der Erfindung sind zunächst die **Verbindungen E1,** die dadurch erhältlich sind, dass man
(a) 1 mol eines Polyols mit mindestens drei OH-Gruppen, ausgewählt aus der Gruppe Pentaerythrit und Trimethylolpropan, mit 1 bis 100 mol Propylenoxid oder mit 1 bis 100 mol einer Mischung von Ethylen- und Propylenoxid, die mindestens 65 mol% Propylenoxid - bezogen auf die Summe von Ethylen- und Propylenoxid - enthält, zu einem Zwischenprodukt Z 1 umsetzt,
(b) das Zwischenprodukt Z1 mit Epichlorhydrin umsetzt, mit der Maßgabe, dass im Mittel mindestens zwei der in Z1 vorhandenen OH-Gruppen umgesetzt werden, wobei ein Zwischenprodukt Z2 entsteht,
(c) das Zwischenprodukt Z2 mit einem Anlagerungsprodukt von 10 bis 100 mol Ethylenoxid oder 10 bis 100 mol einer Mischung von Ethylen- und Propylenoxid, die mindestens 65 mol% Ethylenoxid - bezogen auf die Summe von Ethylen- und Propylenoxid - enthält, an 1 mol eines Monoalkohols mit 1 bis 22 C-Atomen umsetzt, mit der Maßgabe, dass im Mittel mindestens eine Epoxidfunktion des Zwischenproduktes Z2 umgesetzt wird und im Mittel mindestens eine aus dem Zwischenprodukt Z2 stammende Epoxidfunktion erhalten bleibt.

Ein weiterer Erfindungsgegenstand ist die **Verwendung von Verbindungen E1**, die dadurch erhältlich sind, dass man
(a) 1 mol eines Polyols mit mindestens drei OH-Gruppen, ausgewählt aus der Gruppe Pentaerythrit und Trimethylolpropan, mit 1 bis 100 mol Propylenoxid oder mit 1 bis 100 mol einer Mischung von Ethylen- und Propylenoxid, die mindestens 65 mol% Propylenoxid - bezogen auf die Summe von Ethylen- und Propylenoxid - enthält, zu einem Zwischenprodukt Z 1 umsetzt,
(b) das Zwischenprodukt Z1 mit Epichlorhydrin umsetzt, mit der Maßgabe, dass im Mittel mindestens zwei der in Z1 vorhandenen OH-Gruppen umgesetzt werden, wobei ein Zwischenprodukt Z2 entsteht,
(c) das Zwischenprodukt Z2 mit einem Anlagerungsprodukt von 10 bis 100 mol Ethylenoxid oder 10 bis 100 mol einer Mischung von Ethylen- und Propylenoxid, die mindestens 65 mol% Ethylenoxid - bezogen auf die Summe von Ethylen- und Propylenoxid - enthält, an 1 mol eines Monoalkohols mit 1 bis 22 C-Atomen umsetzt, mit der Maßgabe, dass im Mittel mindestens eine Epoxidfunktion des Zwischenproduktes Z2 umgesetzt wird und im Mittel mindestens eine aus dem Zwischenprodukt Z2 stammende Epoxidfunktion erhalten bleibt,
**als Emulgatoren für Epoxidharze**, geeignet zur Herstellung von wäßrigen Emulsionen oder Dispersionen von Epoxidharzen.

Unter wäßrigen Emulsionen oder Dispersionen von Epoxidharzen ist wie in der Fachwelt üblich zu verstehen, dass es sich um Systeme handelt, bei denen Epoxidharze in einem wäßrigen System und insbesondere in Wasser in emulgierter oder dispergierter Form vorliegen, wobei die Emulgierung bzw. Dispergierung durch einen in diesem System vorhandenen Emulgator bewirkt wird.

Die erfindungsgemäßen Emulgatoren sind wie bereits erwähnt Reaktivemulgatoren, da sie pro Molekül im Mittel mindestens eine freie Epoxy-Funktion enthalten. Somit können sie bei einem späteren Aushärteprozess - in Gegenwart von zugesetztem Epoxidharzhärter - reagieren, so dass sie, sobald sie ihre emulgierende bzw. dispergierende Wirkung für Epoxidharze in wäßrigen Systemen nach der Verdunstung des Wassers aus der Beschichtung erfüllt haben, Teil des Polymers werden.

In einer Ausführungsform setzt man bei der Herstellung der Verbindungen E1 in Schritt (a) ausschließlich Propylenoxid ein.

In einer Ausführungsform setzt man bei der Herstellung der Verbindungen E1 in Schritt (a) ausschließlich Propylenoxid ein, mit der Maßgabe, dass man 1 mol des Polyols mit 3 bis 20 mol Propylenoxid umsetzt.

In einer Ausführungsform setzt man bei der Herstellung der Verbindungen E1 in Schritt (c) das Zwischenprodukt Z2 mit einem Anlagerungsprodukt von 10 bis 50 mol Ethylenoxid an 1 mol eines Monoalkohols mit 1 bis 4 C-Atomen um.

Ein weiterer Erfindungsgegenstand sind **Emulgatormischungen,** bestehend aus 1-99 Gew.-% der oben genannten Verbindungen E1 und einem weiteren, von E1 verschiedenen, Epoxidharz-Emulgator E2. Bei dem Epoxidharz-Emulgator E2 handelt es sich vorzugsweise um ein Umsetzungsprodukt von einem Diol mit einem mittleren Molekulargewicht im Bereich von 200 bis 20000, das ausgewählt ist aus der Gruppe der Polyethylenglykole, Polypropylenglykole und EO/PO-Blockpolymere, und Bisphenol-A-Diglycidylether.

In einer ganz besonders bevorzugten Ausführungsform setzt man als Emulgatorkombination E1/E2 eine Mischung der in den Beispielen 1 und 2 (siehe unten) genannten Substanzen ein.

Ein weiterer Erfindungsgegenstand sind **wäßrige Epoxidharz-Zubereitungen** in Form von Emulsionen bzw. Dispersionen eines oder mehrerer Epoxidharze in Wasser, enthaltend - bezogen auf das gesamte System - 1 bis 70 Gew.% eines Epoxidharzes und 0,1 bis 50% des oben genannten Epoxidharz-Emulgators E1, bevorzugt 0,1-20%, besonders bevorzugt 0,1-10% des Emulgators E1.

In einer Ausführungsform enthalten diese wäßrigen Epoxidharz-Zubereitungen - bezogen auf das gesamte System - zusätzlich 0,1-50 Gew.-% eines weiteren, von E1 verschiedenen, Epoxidharz-Emulgators E2. Vorzugsweise handelt es sich bei E2 um ein Umsetzungsprodukt von einem Diol mit einem mittleren Molekulargewicht im Bereich von 200 bis 20000, das ausgewählt ist aus der Gruppe der Polyethylenglykole, Polypropylenglykole und EO/PO-Blockpolymere, und Bisphenol-A-Diglycidylether. Bevorzugt wird der Emulgator E2 in Konzentrationen von 0,5-20 %, besonders bevorzugt in Konzentrationen von 0,5-10% eingesetzt.

In einer ganz besonders bevorzugten Ausführungsform enthalten diese wäßrigen Epoxidharz-Zubereitungen als Emulgatorkombination E1/E2 eine Mischung der in den Beispielen 1 und 2 bzw. den Beispielen 1 und 3 (siehe unten) genannten Substanzen.

In einer bevorzugten Ausführungsform weisen die erfindungsgemäßen wäßrigen Epoxidharz-Zubereitungen, insbesondere diejenigen, die die Emulgatorkombination E1/E2 enthalten, folgende Eigenschaften auf:
- Brookfield-Viskosität ≤ 2000 mPas (bei 25°C);
- Partikelgröße ≤ 1µm
- Feststoffgehalt: ca. 65%
- Lagerstabilität ≥ 6Monate
- Gefrier-Tau-Stabilität ≥ 3 Zyklen

### Zu den (zu emulgierenden) Epoxidharzen

Die im Rahmen der vorliegenden Erfindung zum Einsatz kommenden Epoxidharze H, bei denen es sich ja wie erwähnt um in Wasser zu emulgierende bzw. zu dispergierende Substanzen handelt, sind ihrer Natur nach an sich nicht beschränkt, außer, dass in Wasser bei 20 °C selbstemulgierende bzw. selbstdispergierende Epoxidharze ausgeschlossen sind (da diese keines Emulgators bedürfen).

Bei den Epoxidharzen H handelt es sich insbesondere um - in Wasser nicht selbstemulgierende bzw. nicht selbst dispergierende - Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyl- oder Arylsubstituenten, Ethergruppierungen und ähnliche. Vorzugsweise handelt es sich bei diesen Epoxidverbindungen um Polyglycidylether auf der Basis von mehrwertigen, vorzugsweise zweiwertigen Alkoholen, Phenolen, Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren). Die Epoxidäquivalentgewichte (EEW) dieser Epoxidverbindungen liegen vorzugsweise zwischen 100 und 2000, insbesondere zwischen 170 und 250. Das Epoxidäquivalentgewicht einer Substanz ist dabei als diejenige Menge der Substanz (in Gramm) definiert, welche 1 mol Oxiranringe enthält.

Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1, 1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt.

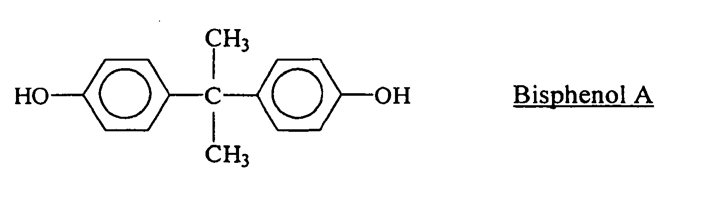

Auch die Polyglycidylether von mehrwertigen Alkoholen sind als Epoxidharze H geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin, Isosorbid und Bis-(4-hydroxycyclohexyl)-2,2-propan genannt.

Es können auch Polyglycidylether von Polycarbonsäuren als Epoxidharze H eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Es können auch Mischungen von mehreren Epoxidharzen H verwendet werden.

Im übrigen können sowohl bei 20 °C feste Epoxidharze, als auch bei 20 °C flüssige Epoxidharze eingesetzt werden. Bei den flüssigen Epoxidharzen handelt es sich insbesondere um solche, die bei 20 °C eine Brookfield-Viskosität im Bereich von 500 bis 20000 mPas aufweisen.

In einer besonders bevorzugten Ausführungsform setzt man flüssige Epoxidharze H ein, die ein mittleres Molekulargewicht im Bereich von 340 bis 400 und insbesondere 370 bis 385 aufweisen.

### Herstellung wäßriger Emulsionen/Dispersionen

Die Herstellung wäßriger Emulsionen bzw. Dispersionen von Epoxidharzen unter Verwendung der Emulgatoren E1 oder einer Mischung von Emulgatoren E1/E2. kann an sich nach allen dem Fachmann bekannten Methoden erfolgen. So finden sich in Fach- sowie Patentliteratur zahlreiche Beispiele für Emulgierverfahren. Die folgende Literatur demonstriert exemplarisch die Breite der möglichen Verfahren:
- E.M. Michalski/ M. Ehreiser, Farbe & Lack 8/2006, Seiten 22-26
- EP 0941286, Beispiele 5-11
- technisches Produktdatenblatt "Disponil ® 23", Richtrezeptur (Cognis GmbH)

### Beispiele

### Abkürzungen:

**EEW** = Epoxidäquivalentgewicht (Epoxy Equivalent Weight)
**UpM** = Umdrehungen pro Minute

### Verwendete Substanzen:

**Polyglykol M2000S:** Handelsprodukt Fa. Clariant
**ZP**: Glycidylether von Pentaerythrit-5,5PO (Anlagerungsprodukt von 5,5 mol Propylenoxid an 1 mol Pentaerythrit)
**Anchor 1040**: Katalysator, BF₃-Aminkomplex, Fa. Air-products
**Pluronic PE 6800** EO/PO-Blockpolymer, Handelsprodukt Fa. BASF
**Bisphenol-A-diglycidylether**: "DER 331", Handelsprodukt Fa. DOW
**Pluronic F 88**: EO/PO-Blockpolymer, Handelsprodukt Fa. BASF

### Beispiel 1: Reaktivemulgator A:

In einem 11-Vierhalskolben, ausgestattet mit Rührer, Thermometer, Rückflusskühler und N₂-Spülung wurden 330 g (0,1681 mol) Polyglykol M2000S sowie 110g (0,4950 Equivalente Epoxid) ZP eingewogen und unter Erwärmung mittels Ölbad aufgeschmolzen. Zu der homogenisierten Schmelze wurden bei 104°C unter Rühren 2,1g Anchor 1040 gegeben und die Mischung auf 130-133°C erhitzt. Nach 5 Stunden Reaktionszeit bei der angegebenen Temperatur wurde eine Epoxidzahl von 1,19% Epoxidsauerstoff und einem EEW von 1344,5g/Equivalent bestimmt und der Kolbeninhalt auf ca. 70°C abgekühlt und abgefüllt.

Es wurden 431,8g einer leicht trüben, hellgelben Schmelze erhalten, die bei Raumtemperatur erstarrte.

### Beispiel 2: Reaktivemulgator B:

In einem 11-Vierhalskolben, ausgestattet mit Rührer, Thermometer, Rückflusskühler und N₂-Spülung wurden 297,1g (0,0354 mol) Pluronic PE 6800 sowie 200,9g (0,5259 mol) Bisphenol-A-diglycidylether eingewogen uns unter Erwärmung mittels Ölbad aufgeschmolzen. Zu der homogenisierten Schmelze wurden unter Rühren bei 106°C 4,0g Anchor 1040 gegeben und die Mischung auf 140°C erwärmt. Nach 3 Stunden Reaktionszeit bei der angegebenen Temperatur wurde eine Epoxidzahl von 2,78% E-poxidsauerstoff bestimmt und der Kolbeninhalt auf 130°C abgekühlt. Bei Erreichen der Temperatur wurden rasch weitere 502g Bisphenol-A-diglycidylether zugegeben und nach gründlicher Durchmischung und Abkühlung auf ca. 70°C das Produkt abgefüllt. Es wurden 975,0g einer deutlich trüben, viskosen hellgelben Flüssigkeit erhalten, die bei Raumtemperatur erstarrte.

### Beispiel 3: Reaktivemulgator C

In einem 11-Vierhalskolben, ausgestattet mit Rührer, Thermometer, Rückflusskühler und N₂-Spülung wurden 297,1g (0,0354 mol) Pluronic F 88 sowie 200,9g (0,5259 mol) Bisphenol-A-diglycidylether eingewogen uns unter Erwärmung mittels Ölbad aufgeschmolzen. Zu der homogenisierten Schmelze wurden unter Rühren bei 109°C 2,0g Anchor 1040 gegeben und die Mischung auf 130°C erwärmt. Nach 3 Stunden Reaktionszeit bei der angegebenen Temperatur wurde eine Epoxidzahl von 2,93% Epoxidsauerstoff bestimmt und der Kolbeninhalt auf 102°C abgekühlt. Bei Erreichen der Temperatur wurden rasch weitere 500g Bisphenol-A-diglycidylether zugegeben und nach gründlicher Durchmischung und Abkühlung auf ca. 70°C das Produkt abgefüllt. Es wurden 970,3g einer leicht trüben, viskosen hellgelben Flüssigkeit erhalten, die bei Raumtemperatur erstarrte.

### Beispiel 4: Reaktivemulgator D

In einem 11-Vierhalskolben, ausgestattet mit Rührer, Thermometer, Rückflusskühler und N₂-Spülung wurden 330 g (0,1681 mol) Polyglykol M2000S sowie 128,7g (0,4942 Equivalente Epoxid) ZP eingewogen und unter Erwärmung mittels Ölbad aufgeschmolzen. Zu der homogenisierten Schmelze wurden bei 81°C unter Rühren 1,8g Anchor 1040 gegeben und die Mischung auf 130-133°C erhitzt. Im Laufe der Reaktion wurden insgesamt 1,0g Anchor1040 in 4 Portionen nachdosiert. Nach 16 Stunden Reaktionszeit bei der angegebenen Temperatur wurde eine Epoxidzahl von 0,97% Epoxidsauerstoff und einem EEW von 1649g/Equivalent bestimmt und der Kolbeninhalt auf ca. 70°C abgekühlt und abgefüllt.

Es wurden 443,4g einer leicht trüben, rotbraunen Schmelze erhalten, die bei Raumtemperatur erstarrte.

### Beispiel 5: Emulsionsherstellung:

In einem Aluminiumbecher mit 250 ml Volumen wurden 80g(0,2094mol) Bisphenol-A-diglycidylether sowie 20g (0,0107 Equivalente Epoxid) des in Beispiel 4 beschriebenen Reaktivemulgators D eingewogen und unter leichtem Erwärmen mittels eines Pendraulik-Rührers, ausgestattet mit einer 38mm-Dispergier-Zahnscheibe, homogenisiert (Rührstufe 1-2). Nach vollständiger Homogenisierung wurden portionsweise 20g vollentsalztes Wasser mittels Tropfpipette unter Rühren (Stufe 1) zugegeben. Dabei entstand zunächst eine W/O-Emulsion, die dann rasch in eine O/W-Emulsion invertierte. Nach erfolgter Phaseninversion wurde 20 min. bei Rührstufe 4 dispergiert, dann langsam über einen Zeitraum von 1h 60g Wasser mithilfe eines Tropftrichters zugegeben. Es wurden 172g einer dünnflüssigen, weißen Emulsion mit einem EEW von 410g/Equivalent, einer Viskosität von 70 mPas (Brookfield, 25°C, Spindel 31, 50 Upm) und einer mittleren Partikelgröße von 718 nm (Coulter LS 13-320, Laser-Lichtstreuung) erhalten.

### Beispiel 6: Emulsionsherstellung:

In einem 21-Planschliff-Laborreaktor, ausgestattet mit Rührer, Rückflusskühler, Tropftrichter, Thermometer und Ölbadheizung wurden 500g (1,3089 mol) Bisphenol-A-diglycidylether, 62,5g (0,0379 Equivalente Epoxid) des in Beispiel 1 beschriebenen Reaktivemulgators A sowie 62,5g (0,2208 Equivalente Epoxid) des in Beispiel 2 beschriebenen Reaktivemulgators B eingewogen. Die Komponenten wurden unter Rühren auf 50°C erwärmt und 60 min. homogenisiert, dann auf 35°C abgekühlt. Es wurden 125,0g vollentsalztes Wasser in 7 min. über einen Tropftrichter zugegeben. Dabei bildete sich erst eine W/O-Emulsion, die während der Homogenisierung sofort in eine O/W-Emulsion invertierte. Die so gebildete Emulsion wurde 20 min. mit maximaler Rührgeschwindigkeit homogensiert, dann langsam (ca. 1,5h) mit insgesamt 183g vollentsalztem Wasser verdünnt. Nach weiterer Homogenisierung (ca. 1h) wurde über ED-Schnellsieb 1000µm abgefüllt. Es wurden 892,8g einer weißen, leicht viskosen Emulsion mit einem EEW (Epoxid-Equivalentgewicht) von 316,2 und einer Viskosität (Brookfield, 25°C, Spindel 31, 50 Upm) von 1930 mPas und einer mittleren Partikelgröße von 538 nm (Coulter LS 13-320, Laser-Lichtstreuung) erhalten.

### Beispiel 7: Emulsionsherstellung

In einem 11-Planschliff-Laborreaktor, ausgestattet mit Rührer, Rückflusskühler, Tropftrichter, Thermometer und Ölbadheizung wurden 364,0g (0,9529mol) Bisphenol-A-diglycidylether, 24,0g (0,0833 Equivalente Epoxid) des in Beispiel 2 beschriebenen Reaktivemulgators B sowie 12,0g (0,0088 Equivalente Epoxid) des in Beispiel 1 beschriebenen Reaktivemulgators A eingewogen und unter Rühren auf 60°C erwärmt. Dann wurde der Rührer ausgeschaltet und rasch 44,0g vollentsalztes Wasser zugegeben. Nach Wiedereinschalten des Rührers wurde sofort eine O/W-Emulsion erhalten, wobei die Temperatur bis 53°C abfiel. Die Emulsion wurde 30 min bei 400 Upm gerührt und anschließend langsam mit 171,7g vollentsalztem Wasser über einen Zeitraum von ca. 1,5h verdünnt. Die Temperatur fiel dabei von 46°C auf 38°C.

Die fertige Emulsion wurde 2h bei 38-33°C homogenisiert und über ED-Schnellsieb 1000µm abgefüllt. Es wurden 572,8g einer weißen, leicht viskosen Emulsion mit einem EEW von 304,6 Eq/g sowie einer Viskosität (Brookfield, 25°C, Spindel 31, 50 Upm) von 1510 mPas und einer mittleren Partikelgröße von 722 nm (Coulter LS 13-320, Laser-Lichtstreuung) erhalten.

### Beispiel 8: Emulsionsherstellung

In einem 11-Planschliff-Laborreaktor, ausgestattet mit Rührer, Rückflusskühler, Tropftrichter, Thermometer und Ölbadheizung wurden 340,0g (0,8901mol) Bisphenol-A-diglycidylether, 40,0g (0,1434 Equivalente Epoxid) des in Beispiel 3 beschriebenen Reaktivemulgators B sowie 20,0g (0,0139 Equivalente Epoxid) des in Beispiel 1 beschriebenen Reaktivemulgators A eingewogen und unter Rühren auf 60°C erwärmt. Dann wurde der Rührer ausgeschaltet und rasch 48,0g vollentsalztes Wasser zugegeben. Nach Wiedereinschalten des Rührers wurde sofort eine O/W-Emulsion erhalten, wobei die Temperatur bis 52°C abfiel. Die Emulsion wurde 30 min bei 400 Upm gerührt und anschließend langsam mit 167,7g vollentsalztem Wasser über einen Zeitraum von ca. 1,5h verdünnt. Die Temperatur fiel dabei von 52°C auf 35°C. Die fertige Emulsion wurde unter leichtem Erwärmen 1h bei 35-50°C homogenisiert und nach 2h Standzeit bei 50°C über ED-Schnellsieb 1000µm abgefüllt. Es wurden 573,6g einer weißen, leicht viskosen Emulsion mit einem EEW von 312,6 Eq/g sowie einer Viskosität (Brookfield, 25°C, Spindel 31, 50 Upm) von 628 mPas und einer mittleren Partikelgröße von 490 nm (Coulter LS 13-320, Laser-Lichtstreuung) erhalten.

## Patentansprüche

1. Verbindungen E1, **dadurch** erhältlich, dass man (a) 1 mol eines Polyols mit mindestens drei OH-Gruppen, ausgewählt aus der Gruppe Pentaerythrit und Trimethylolpropan, mit 1 bis 100 mol Propylenoxid oder mit 1 bis 100 mol einer Mischung von Ethylen- und Propylenoxid, die mindestens 65 mol% Propylenoxid - bezogen auf die Summe von Ethylen- und Propylenoxid - enthält, zu einem Zwischenprodukt Z1 umsetzt, (b) das Zwischenprodukt Z1 mit Epichlorhydrin umsetzt, mit der Maßgabe, dass im Mittel mindestens zwei der in Z1 vorhandenen OH-Gruppen umgesetzt werden, wobei ein Zwischenprodukt Z2 entsteht, (c) das Zwischenprodukt Z2 mit einem Anlagerungsprodukt von 10 bis 100 mol Ethylenoxid oder 10 bis 100 mol einer Mischung von Ethylen- und Propylenoxid, die mindestens 65 mol% Ethylenoxid - bezogen auf die Summe von Ethylen- und Propylenoxid - enthält, an 1 mol eines Monoalkohols mit 1 bis 22 C-Atomen umsetzt, mit der Maßgabe, dass im Mittel mindestens eine Epoxidfunktion des Zwischenproduktes Z2 umgesetzt wird und im Mittel mindestens eine aus dem Zwischenprodukt Z2 stammende Epoxidfunktion erhalten bleibt.

2. Verwendung von Verbindungen E1, **dadurch** erhältlich, dass man (a) 1 mol eines Polyols mit mindestens drei OH-Gruppen, ausgewählt aus der Gruppe Pentaerythrit und Trimethylolpropan, mit 1 bis 100 mol Propylenoxid oder mit 1 bis 100 mol einer Mischung von Ethylen- und Propylenoxid, die mindestens 65 mol% Propylenoxid - bezogen auf die Summe von Ethylen- und Propylenoxid - enthält, zu einem Zwischenprodukt Z1 umsetzt, (b) das Zwischenprodukt Z1 mit Epichlorhydrin umsetzt, mit der Maßgabe, dass im Mittel mindestens zwei der in Z1 vorhandenen OH-Gruppen umgesetzt werden, wobei ein Zwischenprodukt Z2 entsteht, (c) das Zwischenprodukt Z2 mit einem Anlagerungsprodukt von 10 bis 100 mol Ethylenoxid oder 10 bis 100 mol einer Mischung von Ethylen- und Propylenoxid, die mindestens 65 mol% Ethylenoxid - bezogen auf die Summe von Ethylen- und Propylenoxid - enthält, an 1 mol eines Monoalkohols mit 1 bis 22 C-Atomen umsetzt, mit der Maßgabe, dass im Mittel mindestens eine Epoxidfunktion des Zwischenproduktes Z2 umgesetzt wird und im Mittel mindestens eine aus dem Zwischenprodukt Z2 stammende Epoxidfunktion erhalten bleibt, als Emulgatoren für Epoxidharze, geeignet zur Herstellung von wäßrigen Emulsionen oder Dispersionen von Epoxidharzen.

3. Verwendung nach Anspruch 2, wobei man bei der Herstellung der Verbindungen E1 in Schritt (a) ausschließlich Propylenoxid einsetzt.

4. Verwendung nach Anspruch 2 oder 3, wobei man bei der Herstellung der Verbindungen E1 in Schritt (a) ausschließlich Propylenoxid einsetzt, mit der Maßgabe, dass man 1 mol des Polyols mit 3 bis 20 mol Propylenoxid umsetzt.

5. Verwendung nach einem der Ansprüche 2 bis 4 wobei man bei der Herstellung der Verbindungen E1 in Schritt (c) das Zwischenprodukt Z2 mit einem Anlagerungsprodukt von 10 bis 50 mol Ethylenoxid an 1 mol eines Monoalkohols mit 1 bis 4 C-Atomen umsetzt.

6. Emulgatormischungen, bestehend aus 1-99 Gew.-% des Epoxidharz-Emulgators E1 gemäß einem der Ansprüche 2 bis 5 und 1-99 Gew.-% eines weiteren, von E1 verschiedenen, Epoxidharz-Emulgators E2.

7. Emulgatormischungen nach Anspruch 6, wobei es sich bei dem Epoxidharz-Emulgator E2 um ein Umsetzungsprodukt von einem Diol mit einem mittleren Molekulargewicht im Bereich von 200 bis 20000, das ausgewählt ist aus der Gruppe der Polyethylenglykole, Polypropylenglykole und EO/PO-Blockpolymere, und Bisphenol-A-Diglycidylether handelt.

8. Wäßrige Epoxidharz-Zubereitungen in Form einer Emulsion bzw. Dispersion eines oder mehrerer Epoxidharze in Wasser, enthaltend - jeweils bezogen auf das gesamte System - 1 bis 70 Gew.% eines Epoxidharzes und 0,1 bis 50% des Epoxidharz-Emulgators E1 gemäß einem der Ansprüche 2 bis 5.

9. Wäßrige Epoxidharz-Zubereitungen nach Anspruch 8, wobei - bezogen auf das gesamte System - zusätzlich 0,1-50 Gew.-% eines weiteren, von E1 verschiedenen, Epoxidharz-Emulgators E2 enthalten sind.

10. Wäßrige Epoxidharz-Zubereitung nach Anspruch 9, wobei es sich bei dem Epoxidharz-Emulgator E2 um ein Umsetzungsprodukt von einem Diol mit einem mittleren Molekulargewicht im Bereich von 200 bis 20000, das ausgewählt ist aus der Gruppe der Polyethylenglykole, Polypropylenglykole und EO/PO-Blockpolymere, und Bisphenol-A-Diglycidylether handelt.

## Claims

1. Compounds E1, obtainable by (a) reacting 1 mol of a polyol having at least three OH groups, selected from the group consisting of pentaerythritol and trimethylolpropane, with 1 to 100 mol of propylene oxide or with 1 to 100 mol of a mixture of ethylene oxide and propylene oxide containing at least 65 mol% propylene oxide, based on the sum of ethylene oxide and propylene oxide, to give an intermediate Z1, (b) reacting the intermediate Z1 with epichlorohydrin, with the proviso that on average at least two of the OH groups present in Z1 are reacted, forming an intermediate Z2, (c) reacting the intermediate Z2 with an adduct of 10 to 100 mol of ethylene oxide or 10 to 100 mol of a mixture of ethylene oxide and propylene oxide containing at least 65 mol% ethylene oxide, based on the sum of ethylene oxide and propylene oxide, with 1 mol of a monoalcohol with 1 to 22 C atoms, with the proviso that on average at least one epoxide function of the intermediate Z2 is reacted and on average at least one epoxide function originating from the intermediate Z2 is retained.

2. Use of compounds E1, obtainable by (a) reacting 1 mol of a polyol having at least three OH groups, selected from the group consisting of pentaerythritol and trimethylolpropane, with 1 to 100 mol of propylene oxide or with 1 to 100 mol of a mixture of ethylene oxide and propylene oxide containing at least 65 mol% propylene oxide, based on the sum of ethylene oxide and propylene oxide, to give an intermediate Z1, (b) reacting the intermediate Z1 with epichlorohydrin, with the proviso that on average at least two of the OH groups present in Z1 are reacted, forming an intermediate Z2, (c) reacting the intermediate Z2 with an adduct of 10 to 100 mol of ethylene oxide or 10 to 100 mol of a mixture of ethylene oxide and propylene oxide containing at least 65 mol% ethylene oxide, based on the sum of ethylene oxide and propylene oxide, with 1 mol of a monoalcohol with 1 to 22 C atoms, with the proviso that on average at least one epoxide function of the intermediate Z2 is reacted and on average at least one epoxide function originating from the intermediate Z2 is retained, as emulsifiers for epoxy resins, suitable for preparing aqueous emulsions or dispersions of epoxy resins.

3. Use according to Claim 2, the compounds E1 being prepared using exclusively propylene oxide in step (a).

4. Use according to Claim 2 or 3, the compounds E1 being prepared using exclusively propylene oxide in step (a), with the proviso that 1 mol of the polyol is reacted with 3 to 20 mol of propylene oxide.

5. Use according to any one of Claims 2 to 4, the compounds E1 being prepared in step (c) by reacting the intermediate Z2 with an adduct of 10 to 50 mol of ethylene oxide with 1 mol of a monoalcohol having 1 to 4 C atoms.

6. Emulsifier mixtures composed of 1-99% by weight of the epoxy resin emulsifier E1 according to any one of Claims 2 to 5 and 1-99% by weight of a further epoxy resin emulsifier E2 which is different than E1.

7. Emulsifier mixtures according to Claim 6, the epoxy resin emulsifier E2 being a reaction product of a diol having an average molecular weight in the range from 200 to 20 000 which is selected from the group consisting of polyethylene glycols, polypropylene glycols, and EO/PO block polymers and bisphenol A diglycidyl ether.

8. Aqueous epoxy resin preparations in the form of an emulsion or dispersion of one or more epoxy resins in water, comprising - based in each case on the overall system - 1% to 70% by weight of an epoxy resin and 0.1% to 50% of the epoxy resin emulsifier E1 according to any one of Claims 2 to 5.

9. Aqueous epoxy resin preparations according to Claim 8, further comprising - based on the overall system - 0.1 to 50% by weight of a further epoxy resin emulsifier E2 which is different than E1.

10. Aqueous epoxy resin preparation according to Claim 9, the epoxy resin emulsifier E2 being a reaction product of a diol having an average molecular weight in the range from 200 to 20 000 which is selected from the group consisting of polyethylene glycols, polypropylene glycols, and EO/PO block polymers and bisphenol A diglycidyl ether.

## Revendications

1. Composés E1, pouvant être obtenus en ce que
(a) on convertit 1 mole d'un polyol avec au moins trois groupes OH, choisi dans le groupe pentaérythrite et triméthylolpropane, avec 1 à 100 moles d'oxyde de propylène ou avec 1 à 100 moles d'un mélange d'oxydes d'éthylène et de propylène, qui contient au moins 65 % molaires d'oxyde de propylène - rapportés à la somme des oxydes d'éthylène et de propylène -, en un produit intermédiaire Z1,
(b) on convertit le produit intermédiaire Z1 avec de l'épichlorhydrine, avec la condition qu'en moyenne au moins deux des groupes OH présents dans Z1 soient convertis, faisant ainsi apparaître un produit intermédiaire Z2,
(c) on convertit le produit intermédiaire Z2 avec un produit d'addition de 10 à 100 moles d'oxyde d'éthylène ou de 10 à 100 moles d'un mélange d'oxydes d'éthylène et de propylène, qui contient au moins 65 % molaires d'oxyde d'éthylène - rapportés à la somme des oxydes d'éthylène et de propylène -, à 1 mole d'un monoalcool avec 1 à 22 atomes de C, avec la condition qu'en moyenne au moins une fonction époxyde du produit intermédiaire Z2 soit convertie et qu'en moyenne au moins une fonction époxyde provenant du produit intermédiaire Z2 soit conservée.

2. Utilisation de composés E1, pouvant être obtenus en ce que
(a) on convertit 1 mole d'un polyol avec au moins trois groupes OH, choisi dans le groupe pentaérythrite et triméthylolpropane, avec 1 à 100 moles d'oxyde de propylène ou avec 1 à 100 moles d'un mélange d'oxydes d'éthylène et de propylène, qui contient au moins 65 % molaires d'oxyde de propylène - rapportés à la somme des oxydes d'éthylène et de propylène -, en un produit intermédiaire Z1,
(b) on convertit le produit intermédiaire Z1 avec de l'épichlorhydrine, avec la condition qu'en moyenne au moins deux des groupes OH présents dans Z1 soient convertis, faisant ainsi apparaître un produit intermédiaire Z2,
(c) on convertit le produit intermédiaire Z2 avec un produit d'addition de 10 à 100 moles d'oxyde d'éthylène ou de 10 à 100 moles d'un mélange d'oxydes d'éthylène et de propylène, qui contient au moins 65 % molaires d'oxyde d'éthylène - rapportés à la somme des oxydes d'éthylène et de propylène -, à 1 mole d'un monoalcool avec 1 à 22 atomes de C, avec la condition qu'en moyenne au moins une fonction époxyde du produit intermédiaire Z2 soit convertie et qu'en moyenne au moins une fonction époxyde provenant du produit intermédiaire Z2 soit conservée, comme émulsifiants pour des résines époxydes, convenant pour la fabrication d'émulsions ou de dispersions aqueuses de résines époxydes.

3. Utilisation selon la revendication 2, dans laquelle on utilise exclusivement de l'oxyde de propylène à l'étape (a) pour la production des composés E1.

4. Utilisation selon la revendication 2 ou 3, dans laquelle on utilise exclusivement de l'oxyde de propylène à l'étape (a) pour la production des composés E1, avec la condition que l'on convertisse 1 mole du polyol avec 3 à 20 moles d'oxyde de propylène.

5. Utilisation selon l'une quelconque des revendications 2 à 4, dans laquelle, lors de la production des composés E1, on convertit à l'étape (c) le produit intermédiaire Z2 avec un produit d'addition de 10 à 50 moles d'oxyde d'éthylène à 1 mole d'un monoalcool avec 1 à 4 atomes de C.

6. Mélanges émulsifiants, composés de 1-99 % en poids de l'émulsifiant pour résines époxydes E1 selon l'une quelconque des revendications 2 à 5 et de 1-99 % en poids d'un autre émulsifiant pour résines époxydes E2, différent de E1.

7. Mélanges émulsifiants selon la revendication 6, dans lesquels l'émulsifiant pour résines époxydes E2 est un produit de conversion d'un diol avec un poids moléculaire moyen dans la plage de 200 à 20000, qui est choisi dans le groupe des polyéthylène glycols, polypropylène glycols et polymères blocs EO/PO, et le diglycidyléther de bisphénol A.

8. Préparations aqueuses de résines époxydes sous la forme d'une émulsion ou d'une dispersion d'une ou de plusieurs résines époxydes dans l'eau, contenant - chaque fois rapportées au système total - 1 à 70 % en poids d'une résine époxyde et 0,1 à 50 % de l'émulsifiant pour résines époxydes E1 selon l'une quelconque des revendications 2 à 5.

9. Préparations aqueuses de résines époxydes selon la revendication 8, contenant en outre - rapportés au système total - 0,1-50 % en poids d'un autre émulsifiant pour résines époxydes E2, différent de E1.

10. Préparations aqueuses de résines époxydes selon la revendication 9, dans lesquelles l'émulsifiant pour résines époxydes E2 est un produit de conversion d'un diol avec un poids moléculaire moyen dans la plage de 200 à 20000, qui est choisi dans le groupe des polyéthylène glycols, polypropylène glycols et polymères blocs EO/PO, et le diglycidyléther de bisphénol A.
